# EUROPÄISCHE PATENTANMELDUNG

(11) **EP 3 567 552 A1**
(43) Veröffentlichungstag der Anmeldung: **13.11.2019**
(21) Anmeldenummer: 18171612.7
(22) Anmeldetag: 09.05.2018
(51) Int. Cl.: G06T 7/70

(54) **VERFAHREN UND ANORDNUNG ZUR STEUERUNG DER POSITIONIERUNG MINDESTENS EINES MASCHINELL BEWEGTEN OBJEKTES, INSBESONDERE BETANKUNGSROHRE UND/ODER TANKS FÜR EINEN BETANKUNGSVORGANG**

(71) Anmelder: Siemens Aktiengesellschaft, 80333 München (DE)
(72) Erfinder: Fiegert, Michael, 81739 München (DE); Feiten, Wendelin, 85579 Neubiberg (DE)

(57) **Zusammenfassung**

Die Erfindung betrifft ein Verfahren zur Steuerung der Positionierung mindestens eines maschinell bewegten Objektes, insbesondere Betankungsrohre und/oder Tanks für einen Betankungsvorgang bei dem die Generierung von Steuerungsbefehlen zumindest für die Positionierung, insbesondere fortlaufend aktualisiert, auf Grundlage einer Historie aufgezeichneter Bildsequenzen, insbesondere Videos, bei der die Bildsequenzen jeweils zumindest eine akkurate Positionierung des Objektes an der Zielposition enthalten, erfolgt. Ferner betrifft die Erfindung eine Anordnung zur Durchführung des Verfahrens.

## Beschreibung

Die Erfindung betrifft ein Verfahren zur Steuerung der Positionierung mindestens eines maschinell bewegten Objektes, insbesondere Betankungsrohre und/oder Tanks für einen Betankungsvorgang gemäß dem Oberbegriff des Anspruchs 1, sowie eine Anordnung zur Steuerung der Positionierung mindestens eines maschinell bewegten Objektes, insbesondere Betankungsrohre und/oder Tanks für einen Betankungsvorgang gemäß dem Oberbegriff des Anspruchs 12.

Es ist ein so genanntes "On Spot Loading" bekannt. Hierrunter versteht man ein Verfahren, sowie zugehörige Anordnungen, bei denen Tankwagen teilautomatisiert mit dem Gas oder der Flüssigkeit betankt wird. Dabei wird von einem Operator ein zum Auslass des Gases oder der Flüssigkeit ausgestaltetes Rohr exakt über der zum Betanken ausgestalteten Öffnung des Tanks, welcher auf einem (Eisenbahn-) Wagen angebracht ist, positioniert und abgesenkt, so dass daraufhin die Betankung durchgeführt werden kann.

Die der Erfindung zugrundeliegende Aufgabe ist es eine Anordnung und ein Verfahren anzugeben, welches die Nachteile des Standes der Technik überwindet, insbesondere bei der Betankung eine automatisierte akkurate Positionierung ermöglicht.

Diese Aufgabe wird durch das Verfahren zur Steuerung der Positionierung mindestens eines maschinell bewegten Objektes, insbesondere Betankungsrohre und/oder Tanks für einen Betankungsvorgang, ausgehend vom Oberbegriff des Anspruchs 1 durch dessen kennzeichnende Merkmale gelöst, sowie durch die Anordnung zur Steuerung der Positionierung mindestens eines maschinell bewegten Objektes, insbesondere Betankungsrohre und/oder Tanks für einen Betankungsvorgang ausgehend vom Oberbegriff des Anspruchs 11, durch dessen kennzeichnende Merkmale gelöst.

Bei dem erfindungsgemäßen Verfahren zur Steuerung der Positionierung mindestens eines maschinell bewegten Objektes, insbesondere Betankungsrohres und/oder Tanks für einen Betankungsvorgang, erfolgt die Generierung von Steuerungsbefehlen zumindest für die Positionierung, insbesondere fortlaufend aktualisiert, zumindest auf Grundlage einer Historie aufgezeichneter Bildsequenzen, insbesondere Videos, bei der die Bildsequenzen jeweils zumindest eine akkurate Positionierung des Objektes an der Zielposition enthalten.

Vorteil des erfindungsgemäßen Verfahrens besteht darin, dass eine automatisierte Bewegung von Objekten auf Grundlage vergangener erfolgreicher Positionierung am Ziel für zukünftige Abläufe optimiert werden kann, wobei insbesondere das in Bezug setzen der Generierung von Steuerungsbefehlen mit zumindest der einen Bildaufnahme einer akkurate Positionierung des Objektes an der Zielposition in besonderem Maße hierzu bei trägt, da es offensichtlich eine erfolgreiche Steuerungsbefehlssequenz in Bezug mindestens zu der Aufnahme der akkuraten Positionierung setzt.

Bei der erfindungsgemäßen Anordnung zur Steuerung der Positionierung mindestens eines maschinell bewegten Objektes, insbesondere Betankungsrohres und/oder Tanks für einen Betankungsvorgang, sind Mittel zur Durchführung des Verfahrens vorgesehen.

Durch die erfindungsgemäße Anordnung wird Implementierung des erfindungsgemäßen Verfahrens erreicht und damit die Verwirklichung der Vorteile der Erfindung und dessen Weiterbildungen ermöglicht.

Bei einer Weiterbildung des erfindungsgemäßen Verfahrens erfolgt die die Generierung der Steuerungsbefehle auf Grundlage eines maschinellen Lernens derart, dass zumindest eine Bildaufnahmevorrichtung und/oder Bildaufnahmespeichervorrichtung, eine das maschinelle Lernen bereitstellenden Daten verarbeitenden Struktur und eine Steuerungseinrichtung derart funktional miteinander verbunden sind, dass der Struktur als Eingangsgröße eine zumindest eine der aufgezeichneten Bildsequenzen zur Verfügung gestellt wird, die Struktur mit jeder Eingangsgröße einen Trainings- und/oder Lerndurchlauf für das Positionieren gemäß maschinellem Lernen durchführt und auf Grundlage mindestens eines Durchlaufs der Steuerungseinrichtung Steuersignale für die laufende Steuerung zur Verfügung gestellt werden.

Durch diese Weiterbildung der Erfindung wird dem erfindungsgemäßen Verfahren mit dem maschinellen Lernen eine sehr effektive Methode zur Verfügung gestellt, in dem die das maschinelle Lernen bereitstellenden Daten verarbeitenden Struktur in geeigneter Weise mit erfindungsgemäß vorgesehenen und verfahrensgemäß genutzten Vorrichtungen verbunden sowie in vorteilhafter Weise mit geeigneten Daten trainiert wird.

Vorzugsweise wird das erfindungsgemäße Verfahren derart weitergebildet, dass beim Trainings- und/oder Lerndurchlauf zumindest der Schritt mindestens einer Zuordnung zumindest eines Bildes der Sequenz von Bildern zu einem Steuerungssignal erfolgt und/oder diese organisiert gespeichert wird.

Hierdurch wird sichergestellt, dass zumindest eine Zuordnung von einer aktuell ausgeführten Steuerungsbefehlssequenz und einem Bild verfügbar gemacht wird, so dass beispielsweise das maschinelle Lernen im Bild enthaltene Informationen, die für die Bewegung wesentlich sind, wie beispielsweise temporäre oder dauerhafte Ereignisse, wie beispielsweise Hindernisse oder Wettergegebenheiten, einer Generierung von Steuerungsbefehlen zu Grunde legen kann. Damit kann beispielsweise die Reaktion der Steuerung beim Bewegungsablauf durch eine auf Grundlage der Zuordnung optimierte Steuerung bei zukünftigem Vorhandensein gleicher oder ähnlicher Ereignisse verbessert, beispielsweise zügiger oder effektiver, erfolgen. Vorzugsweise wird das erfindungsgemäße Verfahren derart weitergebildet für jede Sequenz von Bildern, insbesondere Videos, beginnend bei einem Bild der Sequenz, welches die Aufnahme der akkuraten Positionierung des Objektes, insbesondere Betankungsrohre und/oder Tanks für einen Betankungsvorgang, an der Zielposition enthält, sequentiell fortgesetzt zu mindestens einem weiteren im Verhältnis zur Aufnahmereihenfolge vorhergehendem Bild der Sequenz einem maschinellen Lernen derart zugeführt, dass als Ergebnis des maschinellen Lernens die Zuordnung des Steuersignals erfolgt und/oder diese organisiert gespeichert wird.

Durch diese Weiterbildung wird erreicht, dass auch Zuordnungen von zeitlich vorhergehenden Steuerungsbefehlssequenzen zu zeitlich vorhergehenden Positionen, beispielsweise dem maschinellen Lernen, zur Verfügung gestellt werden kann, so dass ein Wissen über den Ablauf der Bewegung in Bezug auf aus dem jeweiligen Bild entnehmbaren Informationen für eine Optimierung genutzt werden können.

Alternativ oder ergänzend wird das erfindungsgemäße Verfahren derart weitergebildet, dass nun eine Mehrzahl sequentieller Bildaufnahmen, insbesondere Videos, derart generiert werden, dass dies zueinander zumindest in einem Parameter, insbesondere Ort der Anlage, Position der Aufnahmevorrichtung/-en und/oder Zeit der Generierung, disjunkt erfolgt.

Hierdurch wird sichergestellt dass möglichst viele sich unterscheidende Situationen vorliegen die wiederum in den Bildinformationen erfasst worden sind und somit eine umfangreiche Datensammlung generiert wird, die das maschinelle Lernen effizienter werden lässt, weil beispielsweise hierdurch mit weniger Durchläufen eine von der Leistung her eine mit der menschlichen Intelligenz vergleichbare automatische Steuerung der Bewegungsabläufe erreicht werden kann.

Bevorzugt wird dabei das erfindungsgemäße Verfahren derart weitergebildet, dass das maschinelle Lernen, gemäß Machine-Learning Algorithmen, insbesondere dem so genannten "Probabilistic Graphical Models" - PGM, dem so genannten "Random Forests", dem so genannten "Support Vector Machine" - svn und/oder Derivaten hiervon, betrieben wird.

Hiermit ist ein für diesen Zweck sehr geeigneter und sehr gut in diesem Umfeld implementierbarer Ansatz gegeben mit denen die umfangreichen Daten sowie die sich hierdurch ergebenden umfangreichen Zuordnungen und Korrelationen zwischen Bildinformationen und Steuerung effektiv ausgewertet und genutzt werden können, so dass für die Steuerung letztlich eine künstliche Intelligenz zum Einsatz kommt.

Dieser Vorteil kommt besonders zum Tragen wenn das erfindungsgemäße Verfahren derart weitergebildet wird, dass das maschinelle Lernen gemäß einem Algorithmus des so genannten "Bestärkenden Lernens", auch als "Reiinforcement Learning" bekannt, und/oder gemäß einem so genannten "Deep Lerning" Algorithmus wie dem so genannten "Deep Neural Networks DNNs", insbesondere gemäß und/oder zumindest nach Art des so genannten "keras", so genannten "Tensorflow", so genannten "Caffe", so genannten "Theano", so genannten "Torch", vergleichbaren Bibliotheken und/oder Derivaten hiervon, betrieben wird.

Eine effektive Methode zum organisierten Speichern ist unter anderem dann geboten wenn das erfindungsgemäße Messeverfahren derart weitergebildet wird, dass die Sequenzen von Bildern als Videoaufnahmen codiert werden.

Unter anderem für einen standardisierten Datenaustausch bzw.-zugriff ist es die Weiterbildung des erfindungsgemäßen Verfahrens bei dem die Bilder, Sequenzen der Bilder, Zuordnungen und oder Videoaufnahmen, insbesondere als Datenbank organisiert, gespeichert werden, besonders von Vorteil, insbesondere wenn das Verfahren derart weitergebildet wird, dass die Datenbank dem maschinellen Lernen zugrunde gelegt und/oder auf Basis des maschinellen Lernens aktualisiert wird.

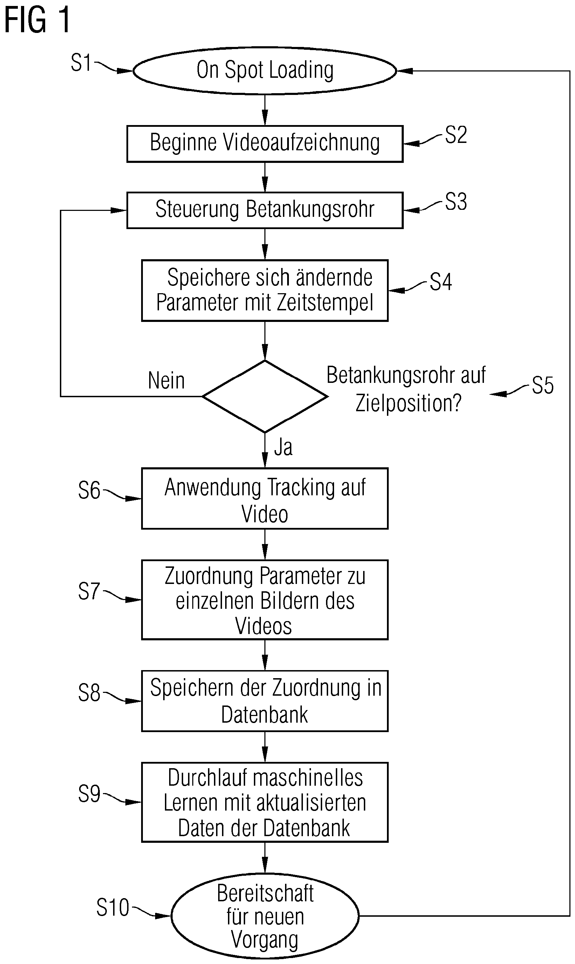

Weitere Vorteile und Einzelheiten der Erfindung werden nun ausgehend von den in den Figuren dargestellten Ausgangssituationen und Ausführungsbeispielen der Erfindung näher erläutert. Dabei zeigt die
- Figur 1: eine schematische vereinfachter Ablauf eines Ausführungsbeispiels der Erfindung

In der Figur 1 ist ein Ablaufdiagramm eines Ausführungsbeispiels der Erfindung dargestellt, welches die Implementierung der Erfindung bei der Betankung von beispielsweise Tankzügen mit einem beweglichen Betankungsrohr, dass gesteuert werden kann.

Das Ausführungsbeispiel der Erfindung hebt schon dadurch vom Stand der Technik ab, dass diese Steuerung im Gegensatz hier nicht überwiegend manuell durch eine Operator erfolgt, sondern im Wesentlichen, also beispielweise nach manueller Vorbereitung und/oder Aktivierung, automatisch.

Der Automatismus wird dabei wie die Figur 1 skizzieren soll durch geeignete Implementierung des erfindungsgemäßen Verfahrens in eine erfindungsgemäße Anordnung realisiert. Dies soll das Ausführungsbeispiel durch einen vereinfachten schematischen Ablaufplan darstellen.

Zu erkennen ist, dass der implementierte Ablauf ausgehend von einem in einem ersten Schritt S1 gegebenen Zustand "On Spot Loading" den Vorgang des Platzierens mit einer Videoaufzeichnung der Positionen des Betankungsrohres, insbesondere dem Bereich des Füllstutzens, in einem zweiten Schritt S2 beginnt.

Das zwingend erforderliche Aufnehmen der Bewegung unterscheidet sich die Erfindung und damit auch das dargestellte Ausführungsbeispiel der Erfindung bereits in einem ersten Merkmal von einem aus der Fachwelt bekannten Ansatz des reinen Automatisierens eines bis dato manuell durchgeführten Vorgangs.

In einem dem zweiten Schritt S2 folgenden dritten Schritt S3 erfolgt der Beginn und somit die Ausführung der Steuerung zur Positionierung des Füllrohres, wobei dieser Schritt auch dem Beging der Videoaufnahme zeitlich vorhergehen, gleichzeitig oder nachfolgend erfolgen kann ohne das Wesen der Erfindung zu behindern.

Um die Positionierung des Betankungsrohres (Füllrohrs) zu automatisieren, sind dabei gemäß der Erfindung und insbesondere dem Ausführungsbeispiel weitere Schritte angedacht, damit beispielsweise mit, insbesondere etablierten, Methoden der Bildverarbeitung und Regelungstechnik arbeiten zu können und so eine Implementierung der Erfindung in Anordnungen vornehmen zu können, insbesondere um ohne große Änderungen der Anordnung und bestehenden Implementierungen dies zu ermöglichen.

Zu diesen Schritten gehört beispielsweise eine im vierten Schritt S4 folgende Speicherung von sich während der Positionierung, also beispielsweise während der Bewegung, ändernden Parametern. Dies kann beispielsweise ein Zeitstempel je Bild der das Video ergebenden Bildsequenz, die Position des Füllrohres und/oder Umgebungsänderungen oder Vergleichbares sein.

Erfassung von Umgebungsänderungen als Parameter dienen vor allem um beispielsweise trotz Behinderung (Wettereinflüsse, Beleuchtung, Lichtverhältnisse, Schatten, Nebel, Verschmutzungen des Wagens, usw.) eine zuverlässige Erkennung eines Loch, also der Zielposition, durch Verwertung der Parameter für zukünftige Steuerungen zu ermöglichen. Dabei können klassische Methoden des automatisierten Erkennens zum Einsatz kommen. Um den damit verbundenen erheblichem Entwicklungsaufwand mit dem zu rechnen ist, bis mit diesen klassischen Methoden eine zuverlässige Erkennung des Lochs per Video zu erreichen ist, zu umgehen, sind die gezeigten Schritte insoweit auch vorteilhaft, als dass sie besonders geeignet sind als eine weitere Ausführungsform der Erfindung den Einsatz neuronaler Netze zu ermöglichen.

Der erfindungsgemäße Einsatz erscheint trotz des unter Umständen aufwändigen Erkennens dennoch gegenüber einem einfacheren Einsatz von Sensoren überlegen, da beispielweise mit aktiven Sensoren, wie Laserscannern, zwar das Erkennen wesentlich leichter zu erreichen zu sein scheint, allerdings sind diese nicht ohne Weiteres für die explosionsgefährdete Umgebung geeignet und müssen hierfür besondere Anforderungen (ATEX) erfüllen. Hier gibt es nur sehr wenige Modelle, die sehr teuer sind, so dass die Erfindung sich bei umfassender Betrachtung deutlich vorteilhafter einsetzbar ist.

Der dritte Schritte S3 und der vierte Schritt S4 werde solange wiederholt, und damit die Bewegung ausgeführt, bis eine in einem fünften Schritt S5 erfolgende Erfassung, ob das Betankungsrohr seine Zielposition erreicht hat, bejaht werden kann.

Ist die Zielposition erreicht worden, so wird in einem sechsten Schritt S6 mit der Anwendung eines Trackingalgorithmus auf das gespeicherte Video derart angewandt, dass ausgehend von dem Bild der Zielposition ein Rückwärtstracking in Verbindung derart mit den weiteren gespeicherten Daten in einem siebten Schritt S7 erfolgt, dass einzelnen Bildern Parameter zugeordnet werden können, beispielsweise unter Zuhilfenahme des Zeitpunktes der Aufnahme als beiden zugrundeliegender Fixpunkt, so dass in einem achten Schritt S8 diese Zuordnung in einer Datenbank gespeichert werden kann.

Mit den genannten Schritten wird folgender allen Ausführungsbeispielen gemeinsamer erfinderischer Gedankengang zugrunde gelegt und verwirklicht.

Wenn das Füllrohr erfolgreich abgesenkt worden ist, kann als sicher angenommen werden, dass Loch offensichtlich genau unter dem Füllrohr platziert ist, also in bekannter Position.

Hat man den Positionierungsvorgang bis dahin als Video aufgezeichnet kennt man bei Abschluss die Position am Ende des Videos. Dann kann man den Tracking Algorithmus (neuronal oder klassisch) auf das rückwärts abgespielte Video anwenden, um jeweils die Position in allen vorigen Bildern zu bestimmen.

Mit den so gewonnenen korrelierenden Daten, kann man eine Datenbank aufbauen mit Bildern, die mit den korrekten Positionen des Lochs annotiert sind. Dies kann durch vorteilhafte Weiterbildung der Erfindung bzw. des gezeigten Beispiels über einen größeren Zeitraum und mehreren Anlagen geschehen, um eine repräsentative Menge an solchen Bildern zu erhalten.

Hierdurch werden etliche variierende Umgebungsparameter gesammelt, wie beispielsweise Jahreszeiten, Waggon-Typen, Verschmutzungsgrade, Sonnenstand, die vorgehend auch schon erläutert das Erkennen des Lochs und der korrekten Position beeinflussen. Anhand jeder neuen Speicherung einer neuen Gegebenheit als Parameter aus all diesen unterschiedlichen Gegebenheiten in Verbindung mit der Position des Bildes aus den Videos in dieser Datenbank wird dann in einem neunten Schritt S9 ein (weiterer) Durchlauf eines maschinellen Lernens, welches beispielsweise nach DNN funktioniert, durchgeführt und damit die Steuerung trainiert, um aus einem gegebenen Bild zuverlässig die Anwesenheit und Position des Lochs für zukünftige Steuerungen zu bestimmen, die in einem durch ein Erreichen eines Zustandes "Bereitschaft für neuen Vorgang" gekennzeichneten zehnten Schritt S10 beispielsweise durch Wechsel in den ersten Schritt S1 in derselben Anlage erfolgen kann aber nicht muss, da die Datenbank als eine Weiterbildung der Erfindung durch geeignete Vernetzung allen erfindungsgemäßen Anlagen zur Verfügung gestellt werden kann.

Die Erfindung ist aber nicht auf die genannten Ausführungsbeispiele beschränkt, sondern umfasst auch andere Ausgestaltungsvarianten, die im Umfang der Ansprüche die Punkte
- Lernen der Loch-Erkennung mit aktuellen Deep-Learning Methoden
- Lernen des Systemmodells für die Steuerung mit aktuellen Deep-Learning Methoden
- Erzeugen der dazu notwendigen gelabelten Daten aus operativem Betrieb bisheriger Anlagen.
einzeln oder in Kombination enthalten und/oder in Kombination durch einzelne oder kombinierte Merkmalen der Unteransprüche und deren Kombinationen weitergebildet worden sind.

Als ein weiteres hierunter fallendes Ausführungsbeispiel wäre es denkbar das die Generierung der Steuerungskommandos aufgrund der, insbesondere in der Datenbank gespeicherten, Ergebnisse durch Verwendung von klassischer Regelungstechnik zu generieren.

Auch ist es denkbar, dass dann in einer Ausbaustufe dieser Teil, also die Generierung der Befehle, durch ein zweites maschinelles Lernen, insbesondere gemäß dem so genannten Deep Learning, DNN, gelernt wird.

Hier sind dann die Labels direkt gegeben, indem die Steuerungskommandos des Operators zusammen mit den Positionsdaten aufgezeichnet werden.

Dies ist eine alternative Variante zum Ausführungsbeispiel bei dem nur ein Netz für die gesamte Aufgabe "End2End" trainiert wird. Input sind sozusagen ausschließlich die Bilder, Output sind dann direkt die Steuerungskommandos.

Zum Training wäre bei diesem Ausführungsbeispiel dann die selbe Datenbank einsatzfähig und geeignet wie oben, mit dem Unterschied, dass hier die Steuerungskommandos direkt an die Bilder annotiert werden, ohne Indirektion über Positionsbestimmung.

Ein weiterer Vorteil der Erfindung kann darin gesehen werden, dass hierdurch unter anderem wegen des Rückwärtstrackings, erfolgreich und effektiv maschinelles Lernen auf automatisierte Bewegungssteuerungen übertragbar wird. Dieser Vorteil entfaltet sich vor allem bei besonderen Anforderungen unterworfenen Anwendungen, wie der Betankung. Dieser Vorteil kommt insbesondere dadurch zum Tragen und wird verwirklicht, indem die spezielle Situation in dieser Anwendung ausgenutzt wird, um das sonst sehr teure manuelle Labeln komplett zu vermeiden und zwar dadurch, dass Daten aus dem heutigen manuellen Betrieb genutzt werden, und indem ausgenutzt wird, dass man beim Training Daten quasi "aus der Zukunft" zur Verfügung hat, d.h. vom Ende einer Aufzeichnung her vorgehen kann.
Eine automatische Lösung spart zudem Personalkosten im Betrieb, ist zuverlässiger und potentiell schneller und damit interessanter für den Einsatz bei solchen Anwendungen. Da die Anzahl verkaufter Anlagen begrenzt ist müssen andererseits die Investitionskosten gering bleiben um einen Marktfähigen Preis zu ermöglichen. Beides zu erreichen scheint mit klassischem Entwurf schwer zu erreichen, mit der Erfindung aber durchaus.

Obwohl DNNs am aussichtsreichsten sind und durch die gute Werkzeugunterstützung (z.B. keras, Tensorflow) mit begrenztem Aufwand realisierbar, ist die Erfindung nicht auf diese Ausgestaltung beschränkt. Es kommen auch je nach Anforderungen der Anwendung oder der Implementierung auch andere Machine-Learning Ansätze in Betracht, wie beispielsweise PGM, Random Forests, svn oder Derivate hiervon.

## Patentansprüche

1. Verfahren zur Steuerung der Positionierung mindestens eines maschinell bewegten Objektes, insbesondere Betankungsrohre und/oder Tanks für einen Betankungsvorgang,
**dadurch gekennzeichnet,**
**dass** die Generierung von Steuerungsbefehlen zumindest für die Positionierung, insbesondere fortlaufend aktualisiert, zumindest auf Grundlage einer Historie aufgezeichneter Bildsequenzen, insbesondere Videos, bei der die Bildsequenzen jeweils zumindest eine akkurate Positionierung des Objektes an der Zielposition enthalten, erfolgt.

2. Verfahren nach dem vorhergehenden Anspruch,
**dadurch gekennzeichnet,**
**dass** die Generierung der Steuerungsbefehle auf Grundlage eines maschinellen Lernens derart erfolgt, dass zumindest eine Bildaufnahmevorrichtung und/oder Bildaufnahmespeichervorrichtung, eine das maschinelle Lernen bereitstellenden Daten verarbeitenden Struktur und eine Steuerungseinrichtung derart funktional miteinander verbunden sind, dass der Struktur als Eingangsgröße eine zumindest eine der aufgezeichneten Bildsequenzen zur Verfügung gestellt wird, die Struktur mit jeder Eingangsgröße einen Trainings- und/oder Lerndurchlauf für das Positionieren gemäß maschinellem Lernen durchführt und auf Grundlage mindestens eines Durchlaufs der Steuerungseinrichtung Steuersingale für die laufende Steuerung zur Verfügung gestellt werden.

3. Verfahren nach dem vorhergehenden Anspruch,
**dadurch gekennzeichnet,**
**dass** beim Trainings- und/oder Lerndurchlauf zumindest der Schritt mindestens einer Zuordnung zumindest eines Bildes der Sequenz von Bildern zu einem Steuerungssignal erfolgt und/oder diese organisiert gespeichert wird.

4. Verfahren nach einem der vorhergehenden Ansprüche,
**dadurch gekennzeichnet,**
**dass** für jede Sequenz von Bildern, insbesondere Videos, beginnend bei einem Bild der Sequenz, welches die Aufnahme der akkuraten Positionierung des Objektes, insbesondere Betankungsrohre und/oder Tanks für einen Betankungsvorgang, an der Zielposition enthält, sequentiell fortgesetzt zu mindestens einem weiteren im Verhältnis zur Aufnahmereihenfolge vorhergehendem Bild der Sequenz einem maschinellen Lernen derart zugeführt wird, dass als Ergebnis des maschinellen Lernens die Zuordnung des Steuersignals erfolgt und/oder diese organisiert gespeichert wird.

5. Verfahren nach einem der vorhergehenden Ansprüche,
**dadurch gekennzeichnet,**
**dass** die eine Mehrzahl sequentieller Bildaufnahmen, insbesondere Videos, derart generiert werden, dass dies zueinander zumindest in einem Parameter, insbesondere Ort der Anlage, Position der Aufnahmevorrichtung/-en und/oder Zeit der Generierung, disjunkt erfolgt.

6. Verfahren nach einem der vorhergehenden Ansprüche,
**dadurch gekennzeichnet,**
**dass** das maschinelle Lernen, gemäß Machine-Learning Algorithmen, insbesondere dem so genannten "Probabilistic Graphical Models" - PGM, dem so genannten "Random Forests", dem so genannten "Support Vector Machine" - svn und/oder Derivaten hiervon, betrieben wird.

7. Verfahren nach einem der vorhergehenden Algorithmen,
**dadurch gekennzeichnet,**
**dass** das maschinelle Lernen gemäß einem Algorithmus des so genannten "Bestärkenden Lernens" und/oder einem so genannten "Deep Lerning" Algorithmus wie dem so genannten "Deep Neural Networks DNNs", insbesondere gemäß und/oder zumindest nach Art des so genannten "keras", dem so genannten "Tensorflow", dem so genannten "Caffe", dem so genannten "Theano", dem so genannten "Torch", vergleichbaren Bibliotheken und/oder Derivaten hiervon, betrieben wird.

8. Verfahren nach einem der vorhergehenden Ansprüche,
**dadurch gekennzeichnet,**
**dass** die Sequenzen von Bildern als Videoaufnahmen codiert werden.

9. Verfahren nach einem der vorhergehenden Ansprüche,
**dadurch gekennzeichnet,**
**dass** die Bilder, Sequenzen der Bilder, Zuordnungen und oder Videoaufnahmen, insbesondere als Datenbank organisiert, gespeichert werden.

10. Verfahren nach dem vorhergehenden Anspruch,
**dadurch gekennzeichnet,**
**dass** die Datenbank dem maschinellen Lernen zugrunde gelegt und/oder auf Basis des maschinellen Lernens aktualisiert wird.

11. Anordnung zur Steuerung der Positionierung mindestens eines maschinell bewegten Objektes, insbesondere Betankungsrohres und/oder Tanks für einen Betankungsvorgang, **gekennzeichnet durch**
Mittel zur Durchführung des Verfahrens nach einem der vorhergehenden Ansprüche.
